# EUROPÄISCHE PATENTANMELDUNG

(11) **EP 1 763 181 A1**
(43) Veröffentlichungstag der Anmeldung: **14.03.2007**
(21) Anmeldenummer: 05019816.7
(22) Anmeldetag: 12.09.2005
(51) Int. Cl.: H04L 12/56

(54) **Verfahren zum Modifizieren einer Route für Datenpakete in einem paket-orientierten Kommunikations-Datennetz und Vorrichtungen dafür**

(71) Anmelder: SIEMENS AKTIENGESELLSCHAFT, 80333 München (DE)
(72) Erfinder: Eisl, Jochen, 85748 Garching (DE); Hancock, Robert, SO18 1NW Southampton (GB); Hepworth, Eleanor, SO14 6HZ Southampton (GB)

(57) **Zusammenfassung**

Die Erfindung bezieht sich auf ein Verfahren zum Modifizieren einer Route zum Routen von Datenpaketen in einem paketorientierten Daten-Kommunikationsnetz, bei dem
- die Route zwischen einer ersten Einrichtung (ED1) und einer zweiten Einrichtung (ED2) über zumindest eine zwischengeschaltete Einrichtung (A1, A2) aufgebaut wird,
- jeder der Einrichtungen (ED1, ED2, A1, A2) eine individuelle Netzadresse des Datennetzes zugewiesen ist und
- die zwischengeschaltete Einrichtung eine individuelle Adresse von zumindest der ersten und der zweiten Einrichtung oder einer weiteren zwischengeschalteten Einrichtung (A1, A2, LR1, LR2) kennt, wobei
- die zwischengeschaltete Einrichtung (A1; A2) feststellen kann, dass sie eine zwischengeschaltete Einrichtung ist,
- eine Routing-Information, dass eine vorgeschaltete Einrichtung direkt mit einer nachgeschalteten Einrichtung (A2; LR2) hinter der zwischengeschalteten Einrichtung (A1; A2) kommunizieren soll, an die vorgeschaltete Einrichtung kommuniziert und
- die vorgeschaltete Einrichtung die Route an der zwischengeschalteten Einrichtung vorbei zu der dieser nachgeschalteten Einrichtung umlegt.

## Beschreibung

Die Erfindung bezieht sich auf ein Verfahren zum Modifizieren einer Route für Datenpakete in einem paketorientierten Kommunikations-Datennetz gemäß den oberbegrifflichen Merkmalen des Patentanspruchs 1 bzw. auf eine Netzeinrichtung zum Durchführen eines solchen Verfahrens.

Verschiedenartige Kommunikations-Datennetze ermöglichen Teilnehmern bzw. deren Endgeräten zunehmend mobiler zu werden. Dies hat zur Folge, dass die Endgeräte oftmals nicht in dem Netz lokalisiert sind, welches durch deren IP-Adresse (IP: Internet Protocol) als einem Lokalisator (Locator) angezeigt ist. Um Routen zwischen einem Endgerät und einem anderen Endgerät trotz der momentanen Lokation des Endgeräts beizubehalten, wird eine explizite Routing-Information, beispielsweise eine Tunnel-Einkapselung (tunnel encapsulation) oder eine Quell-Routing-Information an Punkten, welche auch als Ankerpunkte (anchors) bezeichnet werden, innerhalb des Netzes installiert. Dabei sind die Ankerpunkte als innerhalb der Route zwischengeschaltete Einrichtungen für das Weiterleiten von Datenpaketen an die nächste geeignete Einrichtung, insbesondere die nächste geeignete zwischengeschaltete Einrichtung, verantwortlich, damit die Datenpakete letztendlich die Ziel-Endeinrichtung erreichen. Ein Beispiel für einen solchen Ankerpunkt ist ein mobiler IP-Heimatagent (mobile IP home agent), welcher eine Information hält, um Verkehr für eine bestimmte Endeinrichtung zu deren momentaner Netzlokation zu senden. Dies führt in den Datenpfad von der Quelle eines Datenpakets zu dessen Ziel ein gewisses Maß einer Richtungsunbestimmtheit und Ineffizienz ein.

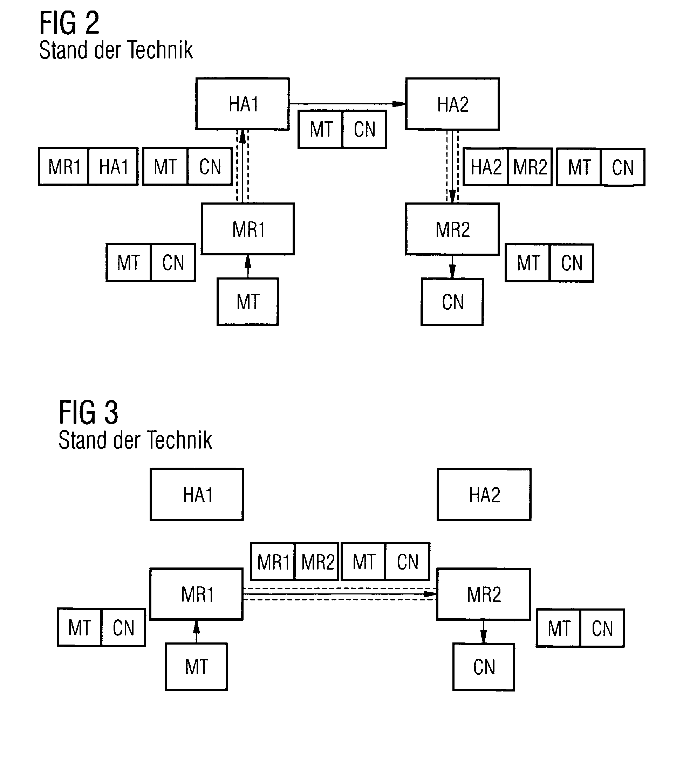

Da zunehmend mehr Einrichtungen und Netze Mobilität ermöglichen, wird die Anzahl von Ankerpunkten und Unbestimmtheits-Leveln längs eines einzelnen Datenpfads zunehmen, was die Routing-Effizienz weiter reduziert. Ein solches beispielhaftes Szenario zum Aufbauen bzw. Festlegen einer Route für Datenpakete in einem paketorientierten Kommunikations-Datennetz ist in Fig. 2 skizziert. Das Verfahren illustriert einen Fall, bei dem ein mobiles Terminal MP als eine Endeinrichtung mit einem korrespondierenden Knoten CN als einer zweiten Endeinrichtung über zwei Mobilitäts-Heimatagenten HA1, HA2 kommuniziert. Im ersten Heimatagenten HA1 wird eine Weiterleitungs-Zustandsinformation für das mobile Termin MT gehalten und in dem zweiten Heimatagenten HA2 wird eine Weiterleitungs-Zustandsinformation (forwarding state information) für den Knoten CN gehalten. Bei diesem Beispiel bieten zweite mobile Router MR1, MR2 einen momentanen Zugriffspunkt für das mobile Terminal MT bzw. den Knoten CN. Das heißt die beiden mobilen Router MR1, MR2 bilden die Lokation, welche eine Lieferung von Paketen zu diesen beiden Endeinrichtungen ermöglichen. Quell- und Ziel-Adressfelder für Datenpakete, welche zwischen dem mobilen Terminal MT und dem Knoten CN übertragen werden, sind beispielhaft neben den jeweiligen Verbindungsstrecken visualisiert. Bei dem dargestellten Szenario wird Verkehr von dem mobilen Terminal MT durch den ersten mobilen Router MR1 in einen rückwärtsgerichteten Tunnel zu dem ersten Ankerpunkt HA1 eingekapselt und der zweite mobile Router MR2 terminiert den Tunnel, welcher für einen Verkehrstransport zu der momentanen Lokation des Knotens CN verwendet wird. Ein zweiter Kopfabschnitt mit Quell- und/oder Ziel-Adressfeldern wird auf dem Datenpfad zwischen dem jeweiligen mobilen Router MR1, MR2 und dem diesen zugeordneten Ankerpunkt HA1 bzw. HA2 benötigt, um Datenpakete zwischen diesen über das Datennetz auszutauschen.

Während diese Lösung sicherstellt, dass Datenpakete sogar zur Zieladresse geliefert werden, wenn die mobilen Router deren Zugriffspunkte zum Netz ändern, wird eine Routing-Ineffizienz eingeführt, durch welche der gesamte Verkehr zwei feste Punkte in dem Netz, die beiden Heimatagenten HA1, HA2, unabhängig von der physikalischen Topologie des Netzes durchlaufen muss. Diese Routing-Ineffizienz hat eine Anzahl von Nachteilen. Nachteilhaft ist insbesondere, dass der ausgeweitete Datenpfad eine größere Latenzzeit aufweisen kann und im Vergleich zu einer optimaleren Route eine beschränkte Bandbreite aufweisen kann. Nachteilhaft ist außerdem, dass der ausgedehnte oder erweiterte Datenpfad eine Route über Netze führen kann, welche unerreichbar sind, wohingegen ein vollständig optimierter Datenpfad eine Konektivität zwischen den beiden miteinander kommunizierenden Endpunkten direkt aufweisen würde. Im Fall einer optimalen Route würde der Verkehr einer Teilnehmerstation als Endeinrichtung direkt zwischen den beiden mobilen Routern MR1, MR2 geroutet, welche die Konektivität für das mobile Terminal MT und den Knoten CN ermöglichen, wie dies in Fig. 3 skizziert ist.

Zur Vereinfachung der Beschreibung wird nachfolgend die folgende Terminologie verwendet. Unter einem expliziten vorwärtsgerichteten Zustand wird ein Zustand in einer Einrichtung auf einem Datenpfad verstanden, welcher eingerichtet ist, um Datenpakete zu der momentanen Lokation der Endeinrichtung in vorwärtsgerichteter Richtung zu leiten. Unter einer Endeinrichtung wird eine Teilnehmerstation, ein Anwendungs-Server etc. verstanden, welche entsprechende Teilnehmerdaten oder Anwendungsdaten als Daten erzeugen oder empfangen. Dies schließt insbesondere mobile Terminals, Desktop-Maschinen etc. ein. Unter einem topologisch unabhängigen Lokalisator wird ein Lokalisator verstanden, welcher von einer Endeinrichtung allokiert bzw. belegt wird, welche einen expliziten vorwärtsgerichteten Zustand anfordert, welcher bei Punkten in dem Netz zu installieren ist, um den Verkehr korrekt zu einer Endeinrichtung zu routen. Beispielsweise kann eine Endeinrichtung eine sogenannte Care-off-address, welche einen momentanen Zugriffspunkt eines mobilen Knotens identifiziert, von dem Heimatnetz eines mobilen Routers allokieren, wobei das Heimatnetz des mobilen Routers explizit den vorwärtsgerichteten Zustand hält, um ein Routen zu dem Netz zu ermöglichen, welches dem mobilen Router zugeordnet ist. Unter einem Ankerpunkt wird ein Knoten auf dem Datenpfad verstanden, welcher eine Erreichbarkeit für den topologisch unabhängigen Lokalisator bekannt macht und einen expliziten vorwärtsgerichteten Zustand zum Routen von Verkehr zu einer Endeinrichtung über einen lokalen Router umfasst. Unter einem topologisch allokierten Lokalisator wird ein Lokalisator verstanden, bei dem der vorwärtsgerichtete Zustand zum Routen zu der Adresse stets optimiert ist, so dass kein expliziter vorwärtsgerichteter Zustand durch das Netz benötigt wird. Der topologisch allokierte Lokalisator ist einer lokalen Netzadresse zugeordnet.

Lösungen zur Routen-Optimierung wurden für spezifische Fälle entwickelt, wobei bestimmte Signalisierungs-Protokolle angenommen wurden.

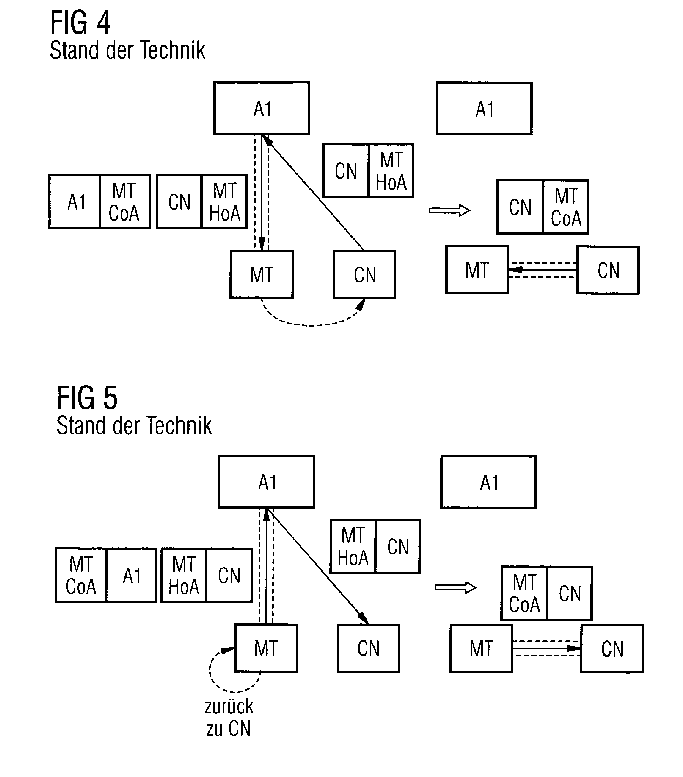

Beispielsweise unterstützt das so genannte Mobile IP als Protokoll eine Routen-Optimierung in sowohl Vorwärtsrichtung als auch Rückwärtsrichtung, wie folgt. Wie dies aus Fig. 4 ersichtlich ist, informiert in der Abwärtsrichtung eines Datenstroms von einem Knoten CN zu einem mobilen Terminal MT das mobile Terminal MT den Knoten CN hinsichtlich seiner Care-off-Address, seiner momentanen Adresse bzw. seines momentanen topologisch allokierten Lokalisators. Der Knoten CN kann dann Verkehr direkt zu dem mobilen Terminal MT richten, wobei ein Bypass um einen zuvor benutzten Ankerpunkt A1 gelegt wird. Dies macht erforderlich, dass der Knoten CN als eine Endeinrichtung die geeignete Signalisierung unterstützt und den expliziten vorwärtsgerichteten Zustand lokal beibehält. Das mobile Terminal MT ist dabei auch verantwortlich zum Beibehalten des expliziten vorwärtsgerichteten Zustands in dem Knoten CN, während seine Lokation sich ändert.

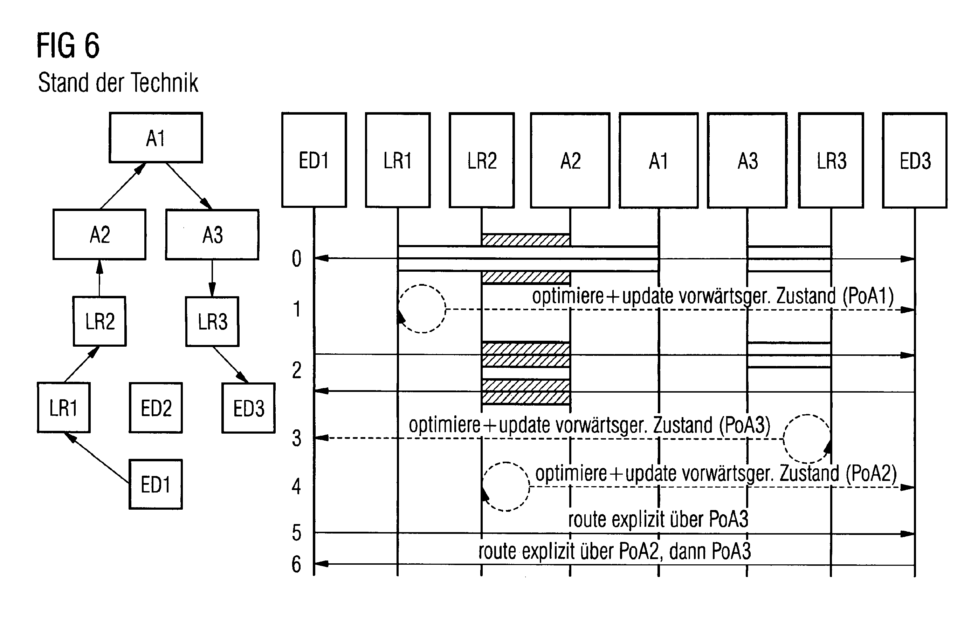

Wie dies aus Fig. 5 ersichtlich ist, führt in der Aufwärtsrichtung eines Datenstroms vom mobilen Terminal MT zum Knoten CN das mobile Terminal MT lokal eine Entscheidung durch, um Daten direkt zu dem Knoten CN zu routen. Das heißt, das mobile Terminal MT ignoriert den expliziten vorwärtsgerichteten Zustand, den es hält und der anzeigt, dass es Verkehr zu seinem Ankerpunkt A in rückwärtsgerichteter Richtung tunneln sollte. Gemäß dem grundlegenden Mobile IP sendet das mobile Terminal MT das Paket lediglich direkt zu dem Knoten CN. Abhängig von der Quelladresse, welche verwendet wird, können Anforderungen bestehen, welche mit einem Eingangsfilter verknüpft sind.

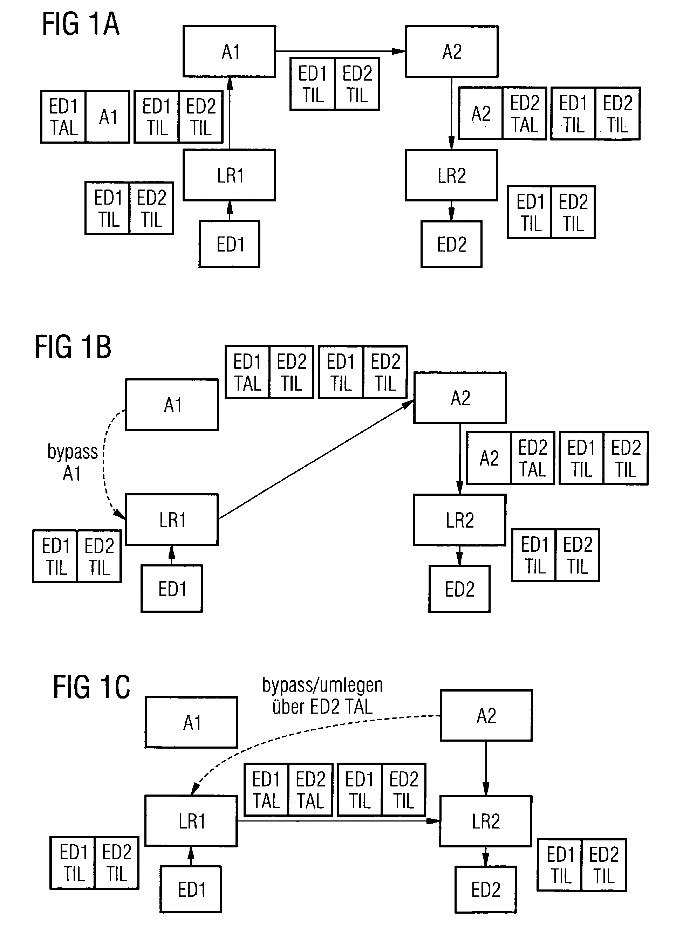

Wie dies aus den Fig. 1 bis 5 ersichtlich ist, werden jeweils Datenpakete mit einer entsprechenden Quelladresse und einer Zieladresse übertragen, wobei beispielhaft die verwendete Einrichtungsbezeichnung als Adresse abgebildet ist.

Wenn solche Mechanismen in Zusammenhang mit einer Vielzahl von Ankerpunkten und möglicherweise vernetzten Zugriffspunkten für die Endeinrichtung zu berücksichtigen sind, wird eine Vielzahl von Anforderungen hinsichtlich insbesondere des Eingangsfilters ersichtlich, wie dies aus Fig. 6 ersichtlich ist. Bei diesen Betrachtungen ist unter einem lokalen Router eine Einheit zu verstehen, welche nur bezüglich Endeinrichtungen anwendbar ist, wobei die lokalen Router stets nur als Zugriffspunkte für eine Endeinrichtung am Anfang oder am Ende eines Datenpfads mit einer oder mehreren zwischengeschalteten Einrichtungen in Form von Ankerpunkten einzusetzen sind.

Fig. 6 zeigt im linken Abschnitt eine räumlich verteilte Anordnung verschiedener Einheiten in Form dreier Endeinrichtungen ED1 - ED3, dreier lokaler Router LR1 - LR3, welche als Zugriffs-Stationen für die Endeinrichtungen ED1 - ED3 dienen, sowie dreier Ankerpunkte A1 - A3, welche als zwischengeschaltete Einrichtungen in dem Datenpfad zwischen die lokalen Router LR1 - LR3 geschaltet sind. Die rechte Seite von Fig. 6 zeigt die Übertragung von Datenpaketen und Signalisierungen zwischen diesen Komponenten.

Die erste Endeinrichtung ED1 kommuniziert über den ersten lokalen Router LR1, welcher einen topologisch allokierten Lokalisator managt, der der ersten Endeinrichtung ED1 zugeordnet ist, wobei der erste lokale Router LR1 einen vorwärtsgerichteten Zustand hält, welcher dieser Adresse zugeordnet ist. Die erste Endeinrichtung ED1 hält auch eine topologisch unabhängige Adresse, welche durch den ersten Ankerpunkt A1 gemanagt wird, so dass der gesamte für die erste Endeinrichtung ED1 bestimmte Verkehr durch den ersten Ankerpunkt A1 hindurchpassiert. Der erste lokale Router LR1 weist seinerseits einen topologisch allokierten Lokalisator auf, der ihm zugeordnet ist, wobei dieser durch den zweiten lokalen Router gemanagt wird, welcher einen vorwärtsgerichteten Zustand hält, um ein Routing zu und von diesem Lokalisator zu unterstützen. Die dritte Endeinrichtung ED3 weist einen topologisch unabhängigen Lokalisator auf, welcher durch den dritten Ankerpunkt A3 angeboten wird, und einen topologisch allokierten Lokalisator, welcher durch den dritten lokalen Router LR3 gemanagt wird.

Die nicht-optimierte Route wird durch den Anfangszustand der rechtsseitig skizzierten Ereignisabfolge veranschaulicht. Der Verkehr wird explizit von dem ersten lokalen Router LR1 zum ersten Ankerpunkt A1 geroutet, z.B. getunnelt. Während die Daten durch den zweiten lokalen Router LR2 hindurchgeführt werden, werden sie auch explizit zum zweiten Ankerpunkt A2 geroutet. Daher gibt es zwei Level einer Unbestimmtheit hinsichtlich der Richtung, welche zu berücksichtigen sind, bevor der Verkehr zu der tatsächlichen Zieladresse geroutet werden kann. Auf dem Datenpfad zur dritten Endeinrichtung ED3 wird ein weiterer Level der nicht-eindeutigen Richtung eingeführt, da die Zieladresse des Verkehrs, welche durch die erste Endeinrichtung ED1 zum Erreichen der dritten Endeinrichtung ED3 verwendet wird, der topologisch unabhängige Lokalisator ist, welcher zum dritten Ankerpunkt A3 geroutet wird und dann explizit zu dem topologisch allokierten Lokalisator geroutet wird, der durch den dritten lokalen Router LR3 gemanagt wird.

Eine Optimierung der Route gemäß Mobile IP kann durch die beiden Endpunkte verwendet werden, um einen Teil der nicht-eindeutigen Richtungsbestimmungen längs dieses Datenpfads zu entfernen. Vorgegangen würde dabei in sechs in Fig. 6 dargestellten Schritten. In einem ersten Schritt sendet der erste lokale Router LR1 eine Routen-Optimierung zur dritten Endeinrichtung ED3, welche anzeigt, dass Verkehr für die erste Endeinrichtung ED1 über einen topologisch allokierten Lokalisator gesendet werden sollte. In einem zweiten Schritt wird der Datenpfad zwischen der ersten Endeinrichtung ED1 und der dritten Endeinrichtung ED3 nicht länger explizit über den ersten Ankerpunkt A1 geroutet. In einem dritten Schritt sendet der dritte lokale Router LR3 eine Mitteilung zur Routen-Optimierung zur ersten Endeinrichtung ED1, welche diese über den topologisch allokierten Lokalisator für die dritte Endeinrichtung ED3 informiert. In einem vierten Schritt sendet der zweite lokale Router LR2 eine Routen-Optimierungs-Mitteilung zur dritten Endeinrichtung ED3, welche diese über einen anderen topologisch allokierten Lokalisator informiert, dass Verkehr für die erste Endeinrichtung ED1 darüber geroutet werden sollte.

In einem fünften Schritt wird nun Verkehr von der ersten Endeinrichtung ED1 zur dritten Endeinrichtung ED3 explizit über den dritten lokalen Router LR3 geroutet. In einem sechsten Schritt wird Verkehr von der dritten Endeinrichtung ED3 zur ersten Endeinrichtung ED1 nun explizit über den ersten lokalen Router LR1 geroutet.

Anzumerken ist, dass Mobile IP auf diese Art und Weise theoretisch verwendet werden kann, dies jedoch kein Standardverhalten darstellt und erforderlich machen würde, dass die Endeinrichtungen ED1 - ED3 Mitteilungen bezüglich Routen-Optimierungen von zwischengeschalteten Knoten längs des Datenpfads akzeptieren würden und außerdem vorwärtsgerichtete Zustände für multiple zwischengeschaltete Knoten verstehen und handhaben könnten. Dies würde jedoch eine Vielzahl von Nachteilen zur Folge haben. So müssten die Endeinrichtungen die Signalisierung zur Routen-Optimierung gemäß Mobile IP beherrschen. Außerdem müssten die Endeinrichtungen einen wesentlich komplexeren expliziten vorwärtsgerichteten Zustand behalten und verwalten können, wozu eine geordnete Liste von Ankerpunkten verwaltet werden müsste. Außerdem müssten alle Entscheidungen bezüglich einer Routen-Optimierung lokal innerhalb der lokalen Router durchgeführt werden, welche jedoch nicht notwendigerweise eine adäquate Information dafür besitzen, da z.B. eine Operator-Police für den gerade verwalteten Teilnehmer das Durchführen einer Routen-Optimierung ausschließen könnte.

Die Aufgabe der Erfindung besteht darin, ein alternatives Verfahren zum Modifizieren einer Route in einem Kommunikations-Datennetz sowie vorzugsweise dafür geeignete Einrichtungen vorzuschlagen.

Diese Aufgabe wird durch das Verfahren zum Modifizieren einer Route mit den Merkmalen des Patentanspruchs 1 bzw. durch eine Netzeinrichtung zum Durchführen eines solchen Verfahrens mit den Merkmalen des Patentanspruchs 10 gelöst. Vorteilhafte Ausgestaltungen sind Gegenstand abhängiger Ansprüche.

Bevorzugt wird demgemäß ein Verfahren zum Modifizieren einer Route zum Routen von Datenpaketen in einem paket-orientierten Daten-Kommunikationsnetz, bei dem die Route zwischen einer ersten Einrichtung und einer zweiten Einrichtung über zumindest eine zwischengeschaltete Einrichtung aufgebaut wird, wobei die zwischengeschaltete Einrichtung nicht als ein Endpunkt für die Datenpakete konfiguriert ist und sich in einem Datenpfad zwischen der ersten Einrichtung und der zweiten Einrichtung befindet, jeder der Einrichtungen eine individuelle Netzadresse des Datennetzes zugewiesen ist und die zwischengeschaltete Einrichtung eine individuelle Adresse von zumindest der ersten und der zweiten Einrichtung oder einer weiteren zwischengeschalteten Einrichtung kennt oder aus einem Format des Datenflusses längs der Route herleiten kann. |Vorteilhaft wird das Verfahren dadurch, dass die zwischengeschaltete Einrichtung abgeleitet aus dem Format und/oder einer Datenpaket-Information der längs der Route geleiteten Datenpakete feststellen kann, dass sie eine zwischengeschaltete Einrichtung ist, und dass die zwischengeschaltete Einrichtung eine Routing-Information, dass eine vorgeschaltete Einrichtung direkt mit einer nachgeschalteten Einrichtung hinter der zwischengeschalteten Einrichtung kommunizieren soll, oder eine Kenntnis einer individuellen Adresse der nachgeschalteten Einrichtung hinter der zwischengeschalteten Einrichtung an die vorgeschaltete Einrichtung kommuniziert und dass die vorgeschaltete Einrichtung die Route an der dies kommunizierenden zwischengeschalteten Einrichtung vorbei zu der dieser nachgeschalteten Einrichtung umlegt.

Vorteilhaft ist ein solches Verfahren, bei dem die erste Einrichtung eine erste Endeinrichtung und die zweite Einrichtung eine zweite Endeinrichtung ist, die direkt miteinander und/oder direkt über diesen individuell zugeordnete Netz-Zugriffs-Einrichtungen kommunizieren. Vorteilhaft ist ein solches Verfahren, bei dem ausgehend von der ersten Einrichtung schrittweise jeweils eine der nachfolgend zwischengeschalteten Einrichtungen aus der ursprünglichen Route genommen wird. Vorteilhaft ist ein solches Verfahren, bei dem vor dem Umlegen der Route zum Herausnehmen einer solchen zwischengeschalteten Einrichtung, die dieser nachgeschaltete Einrichtung hinsichtlich Operator-Policen und/oder Vertrauensverhältnissen zum Zulassen der umgelegten Route geprüft wird. Vorteilhaft ist ein solches Verfahren, bei dem die herauszunehmende zwischengeschaltete Einrichtung zu der ersten Einrichtung als einer Endeinrichtung und/oder zu einer Zugangseinrichtung als der ersten Einrichtung zusätzlich zu der Adresse als Routing-Information einer nachfolgend zwischengeschalteten Einrichtung eine Empfehlung zum Umlegen der Route zu dieser zurücksendet. Vorteilhaft ist ein solches Verfahren, bei dem eine Zugangseinrichtung einer ersten bzw. einer zweiten Endeinrichtung als zwischengeschaltete Einrichtung oder dazwischen geschaltete Einrichtungen ursprüngliche Routen-Informationen speichern zur Verwendung im Fall eines späteren Ausfallens einer umgelegten Verbindung zwischen Zweien der zwischengeschalteten Einrichtungen. Vorteilhaft ist ein solches Verfahren, bei dem die ursprüngliche Route oder eine Routen-Information zu der ursprünglichen Route in einer zwischengeschalteten Einrichtung und/oder einer Zugangseinrichtung für eine Endeinrichtung aufrechterhalten wird zum Routen von Daten für den Fall eines Ausfalls einer durch das Umlegen entstandenen neuen Verbindung. Vorteilhaft ist ein solches Verfahren, bei dem eine Zugangseinrichtung einer zweiten Endeinrichtung am Ende der Route nach abgeschlossener Verkürzung der Route durch Umlegung die durch Umlegung betroffenen vorgeschalteten Einrichtungen bezüglich topologischer Änderungen und/oder bezüglich ausgefallener umgelegter Verbindungen informiert. Vorteilhaft ist ein solches Verfahren, bei dem von einer zwischengeschalteten Einrichtung oder einer Zugangseinrichtung nach Umlegung der Route in Richtung einer ersten Endeinrichtung zurückgerichtete Datenpakete im Paket-Kopfabschnitt eine Information eingesetzt bekommen zum Hinweisen auf die ursprüngliche Verbindung und/oder auf deren Umlegung als ein Berechtigungsnachweis zur Identifizierung der das Datenpaket sendenden und nicht mehr in der aktuellen Route eingebundenen Einrichtung.

Bevorzugt wird eine Netzeinrichtung zum Durchführen eines solchen Verfahrens mit einer Speichereinrichtung zum Speichern einer eigenen eindeutigen Netzadresse und einer eindeutigen Netzadresse einer nachgeschalteten Einrichtung auf einer ursprünglich eingerichteten Route und mit einer Steuereinrichtung zum Ermitteln, ob die Netzeinrichtung eine zwischengeschaltete Einrichtung in der Route ist und falls ja, zum Mitteilen der Adresse der nachgeschalteten Einrichtung oder einer entsprechenden Routing-Information an eine vorgeschaltete Einrichtung zum Umlegen der Route durch die vorgeschaltete Einrichtung direkt zur nachgeschalteten Einrichtung unter Umgehung dieser Netzeinrichtung selber.

Vorteilhaft ist eine solche Netzeinrichtung bzw. zwischengeschaltete Einrichtung, welche ausgebildet ist, als eindeutig adressierte Einrichtung zum Empfangen von Datenpaketen und zum Weiterleiten empfangener Datenpakete an eine nachfolgend nachgeschaltete Netzeinrichtung und/oder an eine nachfolgend zwischengeschaltete Einrichtung. Vorteilhaft ist eine solche Netzeinrichtung bzw. zwischengeschaltete Einrichtung, welche ausgebildet ist, als eine Zugangseinrichtung für eine funkgestützte mobile Endeinrichtung.|

Im Idealfall wird verfahrensgemäß eine Route für Teilnehmerdatenverkehr geboten, welche in höchstem Maße optimiert ist und bei der Datenpakete direkt zwischen den beiden mobilen Routern als Zugangseinrichtungen für die Endeinrichtungen übertragen werden. Verfahrensgemäß wird dabei eine Lösung vorgeschlagen, welche davon ausgeht, dass eine im Datenpfad zwischengeschaltete Einrichtung in Form insbesondere eines Ankerpunkts erkennen kann, dass eine Routen-Optimierung möglich ist. Geboten wird dadurch eine robuste Kommunikationsstruktur unter Verwendung von Routing-Protokollen, welche vorzugsweise standardmäßig vorhanden sind und zum Einrichten einer nicht-optimierten Route dienen, was eine einfache Verfahrensweise und Umsetzung ermöglicht. Beschrieben wird ein Weg zum Konfigurieren einer geeigneten expliziten vorwärtsgerichteten Zustandsinformation in relevanten Knoten längs des Datenpfads. Anwendbar ist die Verfahrensweise auf eine große Vielzahl von Szenarien über das konkret beschriebene Szenario hinaus. Eine Umsetzung ist in beliebigen Szenarien möglich, in denen eine Einrichtung längs eines Datenpfads in der Lage ist, zu bestimmen, dass eine effizientere Route möglich ist, wobei die Einrichtung dazu insbesondere Informationen verwendet, welche in Tunnel-Headern vorhanden sind. Jedoch können auch andere Informationsquellen wie eine explizite Routing-Header-Information etc. verwendet werden. Eine Umsetzung ist auch in Fällen möglich, in denen eine hierarchische Topologie vorliegt.

Eine derartige Optimierung des Datenpfads bietet eine bessere Latenzzeit und eine potenziell größere Bandbreite längs des Datenpfades zwischen den kommunizierenden Knoten, insbesondere zwischen den kommunizierenden Endeinrichtungen. Außerdem wird das Erfordernis beseitigt, Verkehr über eine Infrastruktur zu routen, welche möglicherweise unerreichbar wird oder ist. Dadurch wird eine robustere Kommunikationsstruktur unter Verwendung vorzugsweise des standardmäßigen Routing-Protokolls ermöglicht, welches üblicherweise zum Routen zu den Ankerpunkten als zwischengeschalteten Einrichtungen verwendet wird. Geboten wird ein einfaches Verfahren, wobei eine Topologie-Information außerhalb eines zwischengeschalteten Inter-Netzwerk-Bereichs beibehalten wird.

Während andere Routen-Optimierungs-Techniken existieren, sind diese für ganz spezielle Mobilitätsfälle ausgebildet. Demgegenüber wird durch die beschriebene Verfahrensweise eine Möglichkeit zur Routen-Optimierung mittels existierender Techniken und einer Vielzahl von Vorteilen ermöglicht. So wird von den Endbenutzern bzw. Endstationen eine ansonsten erforderliche Komplexität ferngehalten. Endstationen als Teilnehmer-Terminals müssen keine zusätzliche Unterstützung bieten, wie dies beispielsweise gemäß MIPv6 erforderlich wäre. Daher wird für das Endsystem eine verbesserte Ende-zu-Ende-Weiterleitung erfahrbar, wobei die im Hintergrund erforderliche Signalisierung zwischen den Stationen im Bereich des Datenpfades für die Endeinrichtungen transparent bleiben.

Möglich ist auch die Einbindung von Entscheidungen der Operatoren bezüglich Policen. Das Bereitstellen eines Eckpunkt-Trimmens als einem Dienst kann speziell durch die Operatoren und eine von diesen vorgegebene Police implementiert werden, um momentane Lastsituationen und andere Kriterien berücksichtigen zu können, so dass eine als ein Eckpunkt zwischengeschaltete Einrichtung je nach beispielsweise Netzauslastung eine derartige Routen-Optimierung zulassen oder verweigern kann.

Ermöglicht wird das Einrichten optimaler oder optimierter Routen zwischen Einrichtungen und Netzen. Das Einrichten optimaler oder optimierter Routen kann dabei schrittweise ermöglicht werden, das heißt, das Entfernen von Mobilitäts-Ankerpunkten als zwischengeschalteten Einrichtungen aus dem weiterleitenden vorwärtsgerichteten Datenpfad kann in mehreren aufeinander folgenden Schritten durchgeführt werden, da eine Strategie, welche eine gesamte Optimierung in einem Schritt erforderlich macht, nicht erforderlich ist.

Möglich ist in vorteilhafter Weise auch das Herausnehmen bzw. Entfernen einzelner Punkte, falls ein Fehler auf einem entsprechenden Datenpfad zu diesen besteht oder auftritt. Das Entfernen von Ankerpunkten als zwischengeschalteten Einrichtungen aus dem weiterleitenden vorwärtsgerichteten Datenpfad ist dabei äquivalent zu dem Entfernen einzelner Fehlerpunkte, wie dies für sich genommen bei einem MIP-Heimatagent der Fall wäre. Falls ein Tunnel-Endpunkt längs des vorwärtsgerichteten Datenpfads ausfällt, kann ein dazu unterschiedlicher vorwärtsgerichteter Datenpfad aufgrund einer früheren Eckpunkt-Trimm-Information zurückgewonnen und verwendet werden.

Auch eine Unterbrechungs-Operation kann unterstützt werden, falls z.B. die beiden lokalen Router die Verbindung bzw. Konektivität mit dem weiteren Internet verlieren, jedoch noch miteinander verbunden (peered) sind. Falls z.B. zwei gepeerte Routing-Gruppen die Konektivität mit dem Internet verlieren, dabei aber noch miteinander kommunizieren können, ist die allgemeine Kommunikation auch weiterhin möglich.

Eine Anwendung auf beliebige Topologien und Netze ist möglich. Die Lösung ist insbesondere für beliebige Netze anwendbar, welche einen IP-Transport, eine Paket-Encapsulation und eine Paket-Decapsulation und ein Corner-Trimming unterstützen, welche in einem IP-basierten Mobilitäts-Management-Protokoll integriert sind.

Geboten werden auch mehr Möglichkeiten, Verkehr zusammenzufassen, der die gleichen Netzsegmente durchquert. Insbesondere für VPN-Lösungen (VPN: Virtual Private Network), bei denen Verkehr zusammengefasst wird, kann eine Routen-Optimierung auf Basis eines derartigen Eckpunkt-Trimmens verwendet werden, um einen Lastausgleich (load balancing) zu erzielen und zusätzlich spezifische vorwärtsgerichtete Dienste zu bieten.

Unterstützt wird vorzugsweise auch eine unmittelbare Rückrichtung (on the fly) von Verkehr ohne Paket-Verlust. Falls ein Ankerpunkt als zwischengeschaltete Einrichtung herausgenommen wird auf Basis der Regel "make-before-break". Das heißt, wenn neue Tunnel eingerichtet werden, könnte ein zurückgerichtetes Routen ohne Paketverlust On-the-Fly durchgeführt werden.

Vorteilhafter Weise ist auch eine Entkopplung von aufwärtsgerichteten und abwärtsgerichteten Datenströmen über entsprechende Routen möglich. Für bidirektionalen Verkehr kann eine aufwärtsgerichtete und eine abwärtsgerichtete Richtung unabhängig voneinander gehandhabt werden, was im Gegensatz zu Mobile IP steht, wo üblicherweise ein bidirektionaler Tunnel eingerichtet wird.

Ein Ausführungsbeispiel wird nachfolgend anhand der Zeichnung näher erläutert. Es zeigen:
- Fig. 1A-1C: jeweils zwei Endeinrichtungen, welche über einen diesen jeweils zugeordneten lokalen Router miteinander kommunizieren, wobei eine anfängliche Route über zwei zwischengeschaltete Ankerpunkte führt und wobei in den einzelnen Figuren zwei Verfahrensschritte zur Optimierung dieser Route skizziert sind und
- Fig. 4 - 6: verschiedene derartige Einrichtungen, bei welchen eine Routenfestlegung gemäß dem Stand der Technik erfolgt.

Wie dies aus Fig. 1A - 1C ersichtlich ist, wird eine Übertragung von Datenpaketen von einer ersten Endeinrichtung ED1 zu einer zweiten Endeinrichtung ED2 über ein Kommunikationsnetz durchgeführt. Dabei wird zwischen den beiden Endeinrichtungen ED1, ED2 und weiteren Netzeinrichtungen eine Kommunikation über jeweils einen lokalen Router LR1 bzw. LR2 aufgebaut. Die Kommunikation zwischen der ersten Endeinrichtung ED1 und dem ersten lokalen Router LR1 und die Kommunikation zwischen der zweiten Endeinrichtung ED2 und dem zweiten lokalen Router LR2 erfolgt vorzugsweise über Funk-Schnittstellen. Dargestellt sind schematisch Quell- und Ziel-Adressen bzw. entsprechende Informationen in Kopfabschnitten, welche für das Routen von Datenpaketen verwendet werden. Zur Vereinfachung sind dabei anstelle üblicher Adressen die jeweiligen Einrichtungs-Bezugszeichen verwendet.

Fig. 1A zeigt eine anfängliche Route, welche in herkömmlicher Art und Weise von der ersten Endeinrichtung ED1 zu deren zugeordnetem lokalen Router LR1 und darüber zu einem ersten Ankerpunkt A1 als einer ersten zwischengeschalteten Einrichtung führt. Vom ersten Ankerpunkt A1 werden Datenpakete zu einem zweiten Ankerpunkt A2 und von dort zu dem zweiten lokalen Router LR2 weitergeleitet, welcher der zweiten Endeinrichtung ED2 zugeordnet ist. Der zweite lokale Router LR2 überträgt die empfangenen Datenpakete weiter an die zweite Endeinrichtung ED2. Datenpakete von der zweiten Endeinrichtung ED2 an die erste Endeinrichtung ED1 werden über den entsprechend umgekehrten Datenpfad übertragen.

Fig. 1B zeigt einen ersten Optimierungsablauf, bei dem der erste Ankerpunkt A1 als erste zwischengeschaltete Einrichtung erkennt, dass eine Umgehung möglich ist und eine entsprechende Information zum Umleiten bzw. Umlegen der Route um ihn selber herum an den ersten lokalen Router LR1 als die ihm vorgeschaltete Einrichtung überträgt. Der erste lokale Router LR1 sendet daraufhin weitere Datenpakete über eine entsprechend umgelegte Route anstelle zum ersten Ankerpunkt A1 direkt zum zweiten Ankerpunkt A2, wobei der zweite Ankerpunkt A2 eine dem ersten Ankerpunkt A1 in der ursprünglichen Route nachgeschaltete Einrichtung ausbildet.

Fig. 1C zeigt einen weiteren Optimierungsschritt, bei dem der zweite Ankerpunkt A2 als eine zweite zwischengeschaltete Einrichtung auf dem Datenpfad entsprechend erkennt, dass eine weitere Optimierung und seine eigene Umgebung möglich ist. Daraufhin leitet der zweite Ankerpunkt A2 ein Verfahren gemäß dem vorstehend beschriebenen Optimierungsschritt ein. Abschließend wird die Route daher vom ersten lokalen Router LR1 direkt zum zweiten lokalen Router LR2 unter Umgehung des ersten und des zweiten Ankerpunkts A1, A2 als nun nicht mehr direkt zwischengeschalteten Einrichtungen aufgebaut.

Vorgeschlagen wird somit ein Eckpunkt-Trimmen, bei dem Ankerpunkte aus einem Ende-zu-Ende-Datenpfad zwischen zwei Endeinrichtungen, beispielsweise einem mobilen Terminal und einem Knoten, schrittweise ohne eine Interaktion dieser Knoten bzw. Endeinrichtungen durchgeführt werden kann. Erforderlich ist für einen Knoten längs des Datenpfades vorzugsweise lediglich eine Einrichtung oder ein Mittel, zum Erkennen und Sicherstellen, dass es sich um einen Ankerpunkt als zwischengeschaltete Einrichtung handelt und dass diese selber entscheiden kann, aus dem bestehenden Datenpfad heraus wegoptimiert zu werden. Bei der bevorzugten Ausführungsform werden für das explizite Routing Tunnel-Header (Tunnel-Kopfabschnitte) verwendet, wobei dies jedoch nicht zwingend erforderlich ist. Source-Routing (Routing durch die Quelle), IPv6-Routing-Header oder ein expliziter Host können in den Ankerpunkten und in den Zugriffspunkten (PoAs - Points of Attachments) anstelle dessen gleich wirkend zum Routen verwendet werden.

Bei dem in Fig. 1A dargestellten Ausführungsbeispiel kommunizieren anfänglich die beiden Endeinrichtungen ED1, ED2 miteinander unter Verwendung topologisch unabhängiger Lokalisatoren, was durch entsprechende Adressen bzw. Informationen ED1 TIL und ED2 TIL in den Paket-Headern veranschaulicht ist. Der erste lokale Router LR1 kapselt ein von der ersten Endeinrichtung ED1 erhaltenes Datenpaket ein und routet dieses explizit über den ersten Ankerpunkt A1, wobei ein topologisch allokierte Lokalisator ED1 TAL als eine Adresse des ersten lokalen Routers LR1 in dem Paket-Header entsprechend indiziert wird. Vorteilhafter Weise kann der topologisch allokierte Lokalisator ED1 TAL von mehreren Endeinrichtungen, welche durch den ersten lokalen Router LR1 repräsentiert werden, gemeinsam verwendet werden. Dies ist jedoch zur vereinfachten Darstellung vorliegend nicht veranschaulicht.

Der erste Ankerpunkt A1 leitet das Datenpaket in vorwärtsgerichteter Richtung in das Netz, wo es aufgrund des zweiten topologisch unabhängigen Lokalisators ED2 TIL zum zweiten Ankerpunkt A2 geroutet wird. Der zweite Ankerpunkt A2 ist die Einrichtung, welche eine Erreichbarkeit für den gewünschten Adressraum anbietet. Der zweite Ankerpunkt A2 routet daraufhin das Datenpaket explizit zu einer zweiten topologisch allokierten Adresse ED2 TAL, welche die aktuelle Lokation des zweiten lokalen Routers LR2 ist, der die Zugriffsmöglichkeit der zweiten Endeinrichtung ED2 bietet.

Wie dies aus Fig. 1B ersichtlich ist, zeigt der erste Ankerpunkt A1 dem ersten lokalen Router LR1 an, dass dieser den Verkehr nicht länger durch ihn, den ersten Ankerpunkt A1, leiten muss, sondern direkt an den zweiten Ankerpunkt A2 routen kann. Entsprechend beginnt der erste lokale Router LR1, den Verkehr direkt zur entsprechenden Adresse, dem zweiten topologisch unabhängigen Lokalisator ED2 TIL zu senden, wobei das Routen über den zweiten Ankerpunkt A2 erfolgt, da dieser der Knoten im Netz ist, welcher eine Erreichbarkeit für die angegebene Adresse anbietet.

Bevor der erste lokale Router LR1 das vorwärtsgerichtete Leiten von Datenpaketen längs der neu gebildeten alternativen Route beginnen kann, führt er vorzugsweise eine Prüfung bezüglich der Funktionalität und/oder Eigenschaften des neuen Kandidaten-Ankerpunkts aus, wobei dies gegebenenfalls auch in einem vorherigen Schritt durchgeführt werden kann. Der neue Kandidaten-Ankerpunkt wird durch den zweiten Ankerpunkt A2 gebildet. Beim Prüfen können insbesondere verfügbare Vertrauensbeziehungen und Operator-Policen überprüft werden, welche die Verwendung von gewissen Netzdiensten definieren. Nachfolgend kann der erste lokale Router LR1 ein Eckpunkt-Trimmen zu dem zweiten Ankerpunkt A2 bestätigen und gegebenenfalls eine zusätzliche Information zum Ermöglichen eines Tunnelaufbaus zwischen dem ersten lokalen Router LR1 und dem zweiten Ankerpunkt A2 senden. Insbesondere nach einer Bestätigung der Eckpunkt-Trimmung kann eine entsprechende Assoziation zwischen dem zweiten Ankerpunkt A2 und dem ersten Router LR1 eingerichtet werden.

In einem nachfolgenden und in Fig. 1C dargestellten Schritt wird die Route weiter optimiert. Der zweite Ankerpunkt A2 weiß, dass er eine explizite Routing-Information für die zweite Endeinrichtung ED2 vorliegen hat und kann die Entscheidung treffen, sich selbst aus dem Datenpfad auszuschließen, indem der zweite Ankerpunkt A2 diese explizite Routing-Information mit dem ersten lokalen Router LR1 teilt. Das Weiterleiten der expliziten Routing-Information erfolgt durch den zweiten Ankerpunkt A2 an den ersten lokalen Router LR1, da der zweite Ankerpunkt A2 die Adresse des ersten lokalen Routers LR1 aus den hereinkommenden Paket-Headern als Absenderangabe bestimmen kann. Der zweite Ankerpunkt A2 sendet entsprechend eine zurückgerichtete Mitteilung zum ersten lokalen Router LR1 und bietet diesem die explizite Routing-Information an, welche anzeigt, dass für die zweite Endeinrichtung ED2 bestimmter Verkehr unter Verwendung der zweiten topologisch unabhängigen Adresse ED2 TIL direkt über die der zweiten Endeinrichtung ED2 zugeordnete zweite topologisch allokierte Adresse ED2 TAL gesendet werden sollte, welche durch den zweiten lokalen Router LR2 repräsentiert wird. Andere Aufgaben, die durchzuführen sind, entsprechen denen des vorhergehend beschriebenen Corner- bzw. Eckpunkt-Trimming-Schritts.

Ein solches Verfahren ermöglicht in vorteilhafter Weise ein leichtes Zurückerstellen alter Routen für den Fall eines Fehlers. Bei dem in Fig. 1C visualisierten Beispiel könnte beispielsweise der zweite lokale Router LR2 aus irgendeinem Grund ausfallen. Anstelle zu der langen und sich durch das Netz windenden Route über den ersten und den zweiten Ankerpunkt A1, A2 gemäß Fig. 1A könnte der erste lokale Router LR1 vorzugsweise direkt zu der Route zurückfallen, welche teilweise optimiert ist und nur den ersten Ankerpunkt A1 umgeht, so dass ein Datenpfad gemäß Fig. 1B zum Routen von Verkehr verwendbar bleibt. Diesbezüglich kann entweder der Tunnel zwischen dem ersten lokalen Router LR1 und dem zweiten Ankerpunkt A2 noch in Betrieb gelassen sein, um diesen umgehend wieder benutzen zu können, oder der erste lokale Route LR1 könnte einen Speicher, insbesondere Cache umfassen, in dem frühere Routen hinterlegt sind, welche nach einem Ausfall entsprechend für eine Übertragung von Datenpaketen zum Verbindungsaufbau versucht werden können.

Die Anzahl der Schritte eines möglichen Eckpunkt-Trimmens nehmen im Prinzip mit einer zunehmenden Anzahl von Ankerpunkten als zwischengeschalteten Einrichtungen in dem Ende-zu-Ende-Datenpfad zu, wobei dies auch für den Fall z.B. vernetzter (nested) Topologien gilt. Bei der bevorzugten Verfahrensweise wird dabei nach und nach schrittweise jeweils ein Ankerpunkt als zwischengeschaltete Einrichtung bei jedem Schritt des Eckpunkt-Trimmens eliminiert.

Sobald eine optimierte, insbesondere optimale Route eingerichtet wurde, das heißt beim dargestellten Beispiel insbesondere ein Tunnel zwischen dem ersten lokalen Router LR1 und dem zweiten lokalen Router LR2 eingerichtet wurde, ist es Aufgabe des zweiten lokalen Routers LR2, den expliziten vorwärtsgerichteten Zustand in denjenigen Einrichtungen, die diesen nun halten, beizubehalten. In diesem Fall sind dies sowohl der zweite Ankerpunkt A2 als auch der erste lokale Router LR1, welche bezüglich topologisch allokierten Lokalisatoren zu informieren sind, wenn solche sich ändern sollten.

Um sicherzustellen, dass der erste lokale Router LR1 weiß bzw. erkennt, dass eine rückwärtsgerichtete Mitteilung durch irgendeine Einrichtung längs des Datenpfades erzeugt wurde, kann in deren Paket-Headern ein so genanntes Nonce oder Cookie eingesetzt werden, wozu beispielsweise das Schlüsselfeld in einem GRE-Tunnel-Header (GRE: Generic Routing Encapsulation) verwendbar ist, wobei eine derartige Information zu dem lokalen Router durch den die zurückgerichtete Mitteilung sendenden Knoten zurückgespiegelt (echoed back) werden kann. Ein solcher Ansatz verhindert, dass abseits des Datenpfades liegende Knoten oder andere nicht autorisierte Knoten Verkehr als ein Versuch einer Dienste-Attacke (denial of service attack) in rückwärtsgerichteter Richtung als Verkehr senden.

Für das Triggern einer rückwärtsgerichteten Anforderungs-Mitteilung (request message) werden vorzugsweise die nachfolgenden Aspekte berücksichtigt. Einer der Ankerpunkte A1, A2 kann entscheiden, eine solche Anforderungs-Mitteilung im wesentlichen immer dann zu senden, wenn er wünscht, eine grundlegende Header-Information in einem traversierenden IP-Datenpaket und/oder eine zusätzliche auf eine Police bezogene Information zu erhalten wünscht. Es kann Gelegenheiten geben, welche einen Ankerpunkt A1, A2 veranlassen, ein Update (Aktualisierung) zu senden und/oder die Situation, dass sich der zweite lokale Router LR2 bewegt. In diesem Fall könnte der zweite Ankerpunkt A2 die Wahl treffen, eine andere zurückgerichtete Mitteilung zu senden. Denkbar ist auch, dass in diesem Fall der erste lokale Router LR1 wieder zu dem Datenpfad des Standard-Routings zurückfällt, falls er erfasst, dass die explizite Routen-Information, die ihm geliefert wurde, nicht aktuell ist. In vorteilhafter Weise werden auch Fehler-Mitteilungen zwischen den den Zustand haltenden Einrichtungen ausgetauscht, wie beispielsweise eine Fehler-Mitteilung, dass das Ziel nicht erreichbar ist oder der Zustand nicht mehr aktuell ist. Berücksichtigt werden kann auch, dass sich die topologisch allokierte Adresse für einen bestimmten Endbenutzer-Dienst ändern kann. In einem solchen Fall wird ein neuer Zugriffspunkt und möglicherweise ein neuer Ankerpunkt in dem Weiterleitungs-Datenpfad eingerichtet. In einer solchen Situation wird der standardgemäße Weiterleitungs-Datenpfad unter Verwendung des topologisch unabhängigen Lokalisators für aufwärtsgerichteten und abwärtsgerichteten Datenstrom des Verkehrs verwendet. In nachfolgenden Schritten ist es dann erforderlich, erneut Ankerpunkte als zwischengeschaltete Einrichtungen aus dem vorwärtsgerichteten Pfad wie vorstehend beschrieben zu eliminieren.

Vorzugsweise kann der Tunnel-Eingangspunkt, beispielsweise der erste lokale Router LR1 im vorliegenden Ausführungsbeispiel, die so genannte "make-before-break"-Regel unterstützen, um einen Paketverlust zu vermeiden. In diesem Sinne wird der rückwärtsgerichtete Tunnel eingerichtet, bevor ein zurückgerichtetes Routen von Datenpaketen tatsächlich stattfinden kann.

## Patentansprüche

1. Verfahren zum Modifizieren einer Route zum Routen von Datenpaketen in einem paket-orientierten Daten-Kommunikationsnetz, bei dem
- die Route zwischen einer ersten Einrichtung (ED1) und einer zweiten Einrichtung (ED2) über zumindest eine zwischengeschaltete Einrichtung (A1, A2) aufgebaut wird, wobei die zwischengeschaltete Einrichtung (A1, A2) nicht als ein Endpunkt für die Datenpakete konfiguriert ist und sich in einem Datenpfad zwischen der ersten Einrichtung (ED1) und der zweiten Einrichtung (ED2) befindet,
- jeder der Einrichtungen (ED1, ED2, A1, A2) eine individuelle Adresse zugewiesen ist und
- die zwischengeschaltete Einrichtung (A1, A2) eine individuelle Adresse von zumindest der ersten und der zweiten Einrichtung (ED1, ED2) oder einer weiteren zwischengeschalteten Einrichtung (A1, A2, LR1, LR2) kennt oder aus einem Format des Datenflusses längs der Route herleiten kann,
**dadurch gekennzeichnet ,**
- **dass** die zwischengeschaltete Einrichtung (A1; A2) abgeleitet aus dem Format und/oder einer Datenpaket-Information der längs der Route geleiteten Datenpakete feststellen kann, dass sie eine zwischengeschaltete Einrichtung ist, und
- **dass** die zwischengeschaltete Einrichtung eine Routing-Information, dass eine vorgeschaltete Einrichtung (ED1; LR1; A1) direkt mit einer nachgeschalteten Einrichtung (A2; LR2) hinter der zwischengeschalteten Einrichtung (A1; A2) kommunizieren soll, oder eine Kenntnis einer individuellen Adresse der nachgeschalteten Einrichtung (A2; LR2) hinter der zwischengeschalteten Einrichtung (A1; A2) an die vorgeschaltete Einrichtung (ED1, LR1; A1) kommuniziert und
- **dass** die vorgeschaltete Einrichtung (ED1, LR1; A1) die Route an der dies kommunizierenden zwischengeschalteten Einrichtung (A1; A2) vorbei zu der dieser nachgeschalteten Einrichtung (A2; LR2, ED2) umlegt.

2. Verfahren nach Anspruch 1, bei dem die erste Einrichtung (ED1) eine erste Endeinrichtung und die zweite Einrichtung (ED2) eine zweite Endeinrichtung ist, die direkt miteinander und/oder direkt über diesen individuell zugeordnete Netz-Zugriffs-Einrichtungen (LR1, LR2) kommunizieren.

3. Verfahren nach Anspruch 1 oder 2, bei dem ausgehend von der ersten Einrichtung (ED1, LR1) schrittweise jeweils eine der nachfolgend zwischengeschalteten Einrichtungen (A1, A2) aus der ursprünglichen Route genommen wird.

4. Verfahren nach einem vorstehenden Anspruch, bei dem vor dem Umlegen der Route zum Herausnehmen einer solchen zwischengeschalteten Einrichtung (A1, A2), die dieser nachgeschaltete Einrichtung (A2; LR2) hinsichtlich Operator-Policen und/oder Vertrauensverhältnissen zum Zulassen der umgelegten Route geprüft wird.

5. Verfahren nach einem vorstehenden Anspruch, bei dem die herauszunehmende zwischengeschaltete Einrichtung (A2) zu der ersten Einrichtung (ED1) als einer Endeinrichtung und/oder zu einer Zugangseinrichtung als der ersten Einrichtung (LR1) zusätzlich zu der Adresse als Routing-Information einer nachfolgend zwischengeschalteten Einrichtung (A2) eine Empfehlung zum Umlegen der Route zu dieser zurücksendet.

6. Verfahren nach einem vorstehenden Anspruch, bei dem eine Zugangseinrichtung (LR1, LR2) einer ersten bzw. einer zweiten Endeinrichtung (ED1, ED2) als zwischengeschaltete Einrichtung oder dazwischen geschaltete Einrichtungen (A1, A2) ursprüngliche Routen-Informationen speichern zur Verwendung im Fall eines späteren Ausfallens einer umgelegten Verbindung zwischen Zweien der zwischengeschalteten Einrichtungen.

7. Verfahren nach einem der vorstehenden Ansprüche, bei dem die ursprüngliche Route oder eine Routen-Information zu der ursprünglichen Route in einer zwischengeschalteten Einrichtung (A1, A2) und/oder einer Zugangseinrichtung (LR1, LR2) für eine Endeinrichtung aufrechterhalten wird zum Routen von Daten für den Fall eines Ausfalls einer durch das Umlegen entstandenen neuen Verbindung.

8. Verfahren nach einem vorstehenden Anspruch, bei dem eine Zugangseinrichtung (LR2) einer zweiten Endeinrichtung (ED2) am Ende der Route nach abgeschlossener Verkürzung der Route durch Umlegung die durch Umlegung betroffenen vorgeschalteten Einrichtungen (LR1, A1, A2) bezüglich topologischer Änderungen und/oder bezüglich ausgefallener umgelegter Verbindungen informiert.

9. Verfahren nach einem vorstehenden Anspruch, bei dem von einer zwischengeschalteten Einrichtung (A1, A2) oder einer Zugangseinrichtung (LR1, LR2) nach Umlegung der Route in Richtung einer ersten Endeinrichtung (ED1) zurückgerichtete Datenpakete im Paket-Kopfabschnitt eine Information eingesetzt bekommen zum Hinweisen auf die ursprüngliche Verbindung und/oder auf deren Umlegung als ein Berechtigungsnachweis zur Identifizierung der das Datenpaket sendenden und nicht mehr in der aktuellen Route eingebundenen Einrichtung.

10. Netzeinrichtung (A1, A2) zum Durchführen eines Verfahrens nach einem vorstehenden Anspruch mit
- einer Speichereinrichtung zum Speichern einer eigenen eindeutigen Netzadresse und einer eindeutigen Netzadresse einer nachgeschalteten Einrichtung (A2, LR2) auf einer ursprünglich eingerichteten Route und
- einer Steuereinrichtung zum Ermitteln, ob die Netzeinrichtung (A1, A2) eine zwischengeschaltete Einrichtung in der Route ist und falls ja, zum Mitteilen der Adresse der nachgeschalteten Einrichtung (A2, LR2) oder einer entsprechenden Routing-Information an eine vorgeschaltete Einrichtung (LR1, A1) zum Umlegen der Route durch die vorgeschaltete Einrichtung direkt zur nachgeschalteten Einrichtung (A2, LR2) unter Umgehung dieser Netzeinrichtung (A1, A2) selber.

11. Netzeinrichtung nach Anspruch 10 und/oder zwischengeschaltete Einrichtung nach einem der Ansprüche 1 bis 9, welche ausgebildet ist, als eindeutig adressierte Einrichtung zum Empfangen von Datenpaketen und zum Weiterleiten empfangener Datenpakete an eine nachfolgend nachgeschaltete Netzeinrichtung und/oder an eine nachfolgend zwischengeschaltete Einrichtung.

12. Netzeinrichtung nach Anspruch 10 oder 11, welche ausgebildet ist, als eine Zugangseinrichtung (LR1, LR2) für eine funkgestützte mobile Endeinrichtung.
